# EUROPEAN PATENT SPECIFICATION

(11) **EP 2 832 948 B1**
(45) Date of publication and mention of the grant of the patent: **27.09.2017**
(21) Application number: 13769823.9
(22) Date of filing: 27.03.2013
(51) Int. Cl.: B60J 5/00, B60J 5/10, E05B 49/00, E05F 15/73

(54) **CONTROL STRUCTURE OF VEHICLE**
STEUERSTRUKTUR EINES FAHRZEUGS
STRUCTURE DE COMMANDE DE VÉHICULE

(30) Priority: 30.03.2012 JP 2012080121
(43) Date of publication of application: 04.02.2015
(73) Proprietor: Alpha Corporation, Yokohama-shi, Kanagawa 236-0004 (JP); NISSAN MOTOR CO., LTD., Yokohama-shi, Kanagawa 221-0023 (JP)
(72) Inventor: ONO, Takashi, Yokohama City, Kanagawa, 236-0004 (JP); ENDO, Jun, Yokohama City, Kanagwa, 236-0004 (JP); TANAKA, Kazuya, Yokohama City, Kanagawa, 236-0004 (JP); RAI, Shun, Yokohama City, Kanagawa, 236-0004 (JP); HIRAI, Wataru, Atsugi-shi, Kanagawa, 243-0123 (JP)
(74) Representative: Reeve, Nicholas Edward
(86) International application number: PCT/JP2013/059085
(87) International publication number: WO 2013/146919

(56) References cited:
- DE-A1-102009 023 594
- FR-A1- 2 807 090
- JP-A- H0 960 368
- JP-A- H08 151 838
- JP-A- 2001 227 218
- JP-A- 2003 003 750
- JP-A- 2005 133 529
- JP-A- 2005 307 692

## Description

### TECHNICAL FIELD

The present invention relates to a control structure of a vehicle.

### BACKGROUND ART

As a control structure of a vehicle configured to perform a certain operation when a sensor installed in a vehicle body detects a user or the like, there has been known one described in Japanese Patent Application Publication No. 2005-307692.

In this conventional example, a touch sensor is used as the sensor and is fixed to a rearmost pillar of the vehicle. When the user places a hand above the touch sensor and then moves the hand up and down, the touch sensor detects the motion of the hand. A controller receives the detection signal and drives a back door in a vertical direction.

However, this conventional example requires the user to place a hand above the touch sensor to operate the back door. For this reason, if both hands are full of goods or the like, the user has to put down the goods for a moment for the operation. Hence, the conventional example has such a disadvantage that the usability is not always favorable.

Further, in the conventional example, it is stated that an optical sensor, ultrasound, image recognition, thermal sensor, or the like can be used as the sensor. Nevertheless, even by use of any of these sensors, it is difficult to distinguish a case the user approaches the vehicle from a case where a person, an animal, or etc., other than the user approaches the vehicle. Hence, unintentional door opening and closing cannot be prevented. This brings about a problem of a low operation reliability.

In a further example, FR 2807090 A1 provides a system for operating a car door. The system includes a sensor arranged in a door handle. When the sensor detects an object in the space between the door handle and the door, an action, such as the unlocking of the door closure mechanism, is triggered in the vehicle.

In a yet further example, DE 10 2009 023594 A1 provides a system for the automatic opening of a closing member, such as a back door, of a vehicle. The system includes a capacitive sensor, an optical sensor and a control unit. If movement of an object is sensed by the capacitive sensor, the optical sensor is activated. If the optical sensor also detects movement, the control unit operates the closing member.

In view of the above problems, we have appreciated that it would be desirable to provide a control structure of a vehicle capable of reliably responding to an operation intention of a user outside the vehicle.

### SUMMARY OF THE INVENTION

According to the invention, there is provided a control structure of a vehicle, comprising: a controller (6); a recessed hollow section (1) formed in an outer wall of the vehicle; and a reflective optical sensor (5) configured to emit detection light (3) from a light emitting opening (2) provided in one wall surface of the recessed hollow section (1) toward another wall surface of the recessed hollow section (1), and to detect the entry of a detection target (4) into the recessed hollow section (1) when a received beam level of an amount of reflected beams of the detection light (3) exceeds a certain determination threshold.

The controller (6) is configured to operate a certain control target (7) of the vehicle when the reflective optical sensor (5) detects an entry of the detection target (4) into the recessed hollow section (1).

The control structure is configured in such a manner that an optical axis of the reflective optical sensor (5) is directed to an inner side of the vehicle. The recessed hollow section (1) is a license-plate attachment recess on a back door (8) of the vehicle.

The reflective optical sensor 5 receives at a light receiving portion 5a thereof the reflected beams of the detection light 3 emitted into the recessed hollow section 1 from the light emitting opening 2 provided in the wall surface of the recessed hollow section 1 formed in the vehicle outer wall, and detects the entry of the detection target 4 into the recessed hollow section 1 as an amount of beams thus received (received beam level) exceeds the certain determination threshold. As the reflective optical sensor 5, an infrared ray reflective beam sensor can be used. The light emitting opening 2 of the reflective optical sensor 5 can be set to face an outer panel of the vehicle, or an operation handle, a decorative member, or the like fixed to the outer panel.

Various types of the control target 7 of the controller 6 can be designed, such as actuators for a lighting system and electronic authentication device in addition to driving sources for an locking and unlocking actuator, a power door actuator, and the like.

In the present invention in which an entry of the detection target 4 into the recessed hollow section 1 is detected to then operate a certain control target 7, the predetermined operation can be performed merely by inserting a hand, goods, or the like into the recessed hollow section 1. Accordingly, the convenience is improved.

Moreover, since the reflective optical sensor 5 is used as a sensor, this eliminates the need to further provide, unlike a case of a transmissive optical sensor, a light receiving opening at a position opposite to the light emitting opening 2. Accordingly, for vehicles supposedly used outdoors, the possibility that the light receiving and emitting openings are closed due to dust or the like can be reduced, and the operation reliability is improved.

Further, the reflective optical sensor 5 emits light toward a wall surface of the recessed hollow section 1, more accurately, the wall surface of the recessed hollow section 1 is other than a wall surface in which the light emitting opening 2 is provided. Accordingly, while a person, an animal, a trash, etc., other than a user approaches the vehicle, no detection signal is outputted from the reflective optical sensor 5, or the amount of the light is quite small in comparison with a determination threshold. This makes it possible to prevent an unintentional operation attributable to an approach of an animal or the like to the vehicle.

Not all the detection light 3 has to reach the wall surface of the recessed hollow section 1. Like a spot on an optical axis as in a case of using a single beam-emitting source, it is only necessary that a maximum light intensity region or its nearby region be situated on the wall surface of the recessed hollow section 1.

In this case, the control structure of a vehicle is configured in such a manner that an optical axis of the reflective optical sensor 5 is directed to an inner side of the vehicle. This makes it possible to reduce the amount of beams emitted to the outside of the recessed hollow section 1, so that the detection precision can be further increased.

Further, the direction in which the light emitting opening 2 is opened may be vertical, horizontal, diagonal, or the like, or can be determined as appropriate. Nevertheless, if the control structure of a vehicle is configured in such a manner that the reflective optical sensor 5 is positioned with the light emitting opening 2 being directed downward, this reduces the possibility that rainwater, dust, or the like comes into contact with the light emitting opening 2. Accordingly, the light emitting opening 2 is rarely closed.

As described above, various types of the control target 7 of the controller 6 can be designed, such as a locking and unlocking actuator. Nevertheless, in a case where the control target 7 is an opening and closing operation controller for a door of the vehicle, this makes it possible to control an operation of opening and closing the door merely by inserting a hand into the recessed portion for holding a door handle by a hand, or the like.

The opening and closing operation controller configured to control an operation of opening and closing a power back door, in particular, requires the user having goods in hand to merely insert the goods into the recessed hollow section 1 to perform the opening and closing operation. This makes it possible to improve the workability for loading and unloading goods.

The opening and closing operation controller can be configured to control, in addition to the operation of opening and closing the power door, an operation of locking and unlocking a door, or operations of preparing the opening and closing operation such as outputting a request signal to an electronic key possessed by the user prior to the locking and unlocking.

Moreover, the control structure of a vehicle can be configured in such a manner that the determination threshold for the detection target 4 used in the reflective optical sensor 5 is determined according to a received beam level at the light receiving portion 5a for a certain time before the determination.

The reflective optical sensor 5 is configured to detect the detection target 4 according to an increase in the amount of reflected beams at the light receiving portion 5a when the detection target 4 enters the recessed hollow section 1. The determination is made by comparing the received beam level at the light receiving portion 5a with the determination threshold. Nevertheless, even when the vehicle model is the same, the wall surfaces of the recessed hollow sections 1 of the vehicles are formed from materials having different reflection properties in many cases. For example, vehicles may be surface-treated with different colors. Hence, the received beam levels at the light receiving portions 5a are different in an initial state before the detection target 4 is inserted into the recessed hollow section 1.

Furthermore, unlike indoor facilities, a vehicle has different received beam levels at the light receiving portion 5a in the initial state, depending on the brightness at a stopping or parking site, how much dirt is on the light emitting opening 2 or on a reflection surface, snow accumulated on the wall surface, and the like. Hence, these serve as factors of lowering the determination precision.

Nonetheless, in the present invention in which the determination threshold for the detection target 4 used in the reflective optical sensor 5 is determined according to the received beam level at the light receiving portion 5a for a certain time before the determination, the determination threshold is adjusted to a value appropriate for the use environment. Accordingly, the determination precision is improved.

The determination threshold can be determined as an average value, maximum value, intermediate value, or the like obtained by applying an appropriate statistical processing to the received beam level at the light receiving portion 5a within a certain time before a detection operation on the detection target 4. Further, the determination operation can also be performed according to a statistical determination of a significant difference between the initial state and the determination operation, for example, by statistically testing an average value in the initial state and an average value during the detection operation.

The present invention makes it possible to prevent an output of an operation signal attributable to an approach of a person or the like other than a user to the vehicle. This enables a reliable response to an operation intention of the user outside the vehicle.

### BRIEF DESCRIPTION OF THE DRAWINGS

Fig. 1 shows views for illustrating the present invention: (a) is a view of a vehicle seen from the back, (b) is a side view, and (c) is a cross-sectional view taken along the line 1C-1C in (a).
Fig. 2 is a flowchart for illustrating an operation of a controller.
Fig. 3 is a timing chart of a reflective optical sensor.

### DETAILED DESCRIPTION OF THE PREFERRED EMBODIMENTS

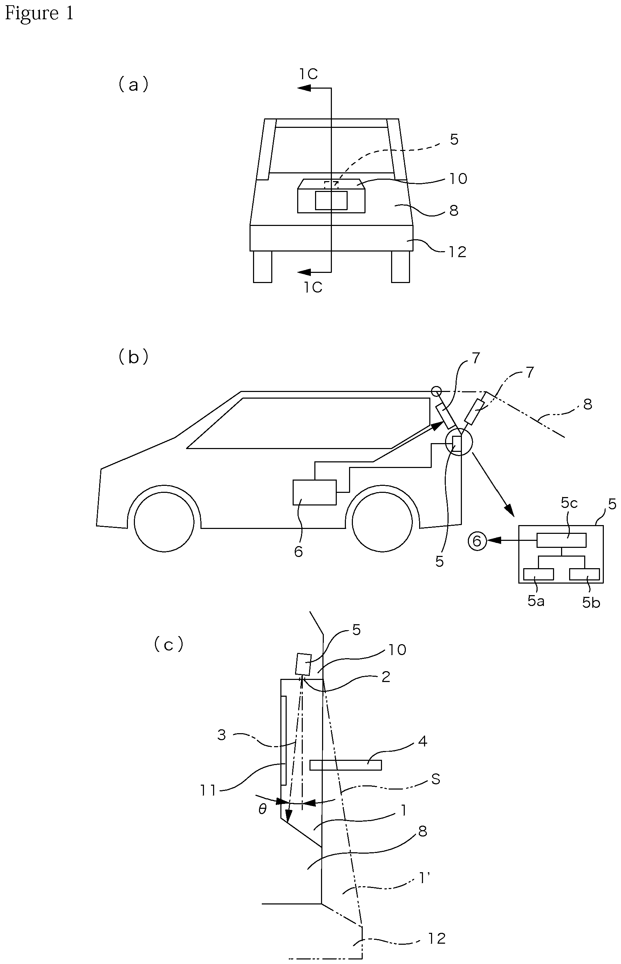

Fig. 1 shows a vehicle to which the present invention is applied. In this embodiment, the vehicle includes a back door 8 configured to close an opening provided at the back of a vehicle body. The back door 8 is formed as a so-called power back door configured to be driven to open and close by an appropriate driver (control target 7) such as a gas damper. To control opening and closing of the back door 8, the back door 8 is provided with a reflective optical sensor 5, and a controller 6 configured to control the driver 7 is provided inside the vehicle. The controller 6 may be incorporated in an on-board computer installed in the vehicle.

On the back door 8, a license-plate attachment recess surrounded by a license plate finisher 10 is formed, and a license plate 11 is fixed in the license-plate attachment recess.

The reflective optical sensor 5 is a so-called infrared-ray reflective optical sensor 5 and configured to detect the presence or absence of a certain detection target 4 according to an amount of reflected beams (received beam level) of an infrared ray emitted as detection light 3 from the detection target 4. The reflective optical sensor 5 is formed as one unit including: an appropriate number of light emitting portions 5b configured to emit the detection light 3; a light receiving portion 5a configured to receive reflected beams of the detection light 3 by the detection target 4, the detection light 3 having been emitted from the light emitting portions 5b; and a sensor controlling portion 5c configured to adjust the timing of emitting the detection light 3, adjust a threshold, compare the threshold with an amount of beams thus received (received beam level), and perform other operations. The activation and termination of the reflective optical sensor 5 are controlled by the above-described controller 6. When the received beam level exceeds the threshold, the reflective optical sensor 5 outputs a detection signal.

The above-described license-plate attachment recess is a recessed hollow section 1. To detect an entry of the detection target 4 into the recessed hollow section 1, the reflective optical sensor 5 is incorporated in a ceiling wall portion of the recessed hollow section 1, more accurately in the license plate finisher 10, in such a manner as to emit the detection light 3 from the ceiling wall portion toward a bottom wall portion of the recessed hollow section 1.

To emit the detection light 3 from the reflective optical sensor 5 into the recessed hollow section 1, a light emitting opening 2 is provided in a ceiling wall surface of the recessed hollow section 1.

Moreover, to prevent the detection light 3 from leaking to the outside of the recessed hollow section 1, the reflective optical sensor 5 is provided in such a manner that an optical axis of the reflective optical sensor 5 is displaced toward the inside of the vehicle by an appropriate angle (θ) with respect to a vertical direction as shown in Fig. 1 (c).

Note that, in the foregoing, the description has been given of the case where the license-plate attachment recess is designed as the recess for detecting an entry of the detection target 4, that is, the recessed hollow section 1. Nevertheless, other than this, for example, as shown in Fig. 1(c), a region regressed to a plane (S) connecting an upper edge of the license-plate attachment recess, serving as an upper edge line, to an upper edge of a rear bumper 12 may be designed as a recessed hollow section 1', and the reflective optical sensor 5 may be provided in such a manner that an entry of the detection target 4 into the recessed hollow section 1' can be detected.

The operation of opening and closing the power back door of the vehicle configured as described above will be described.

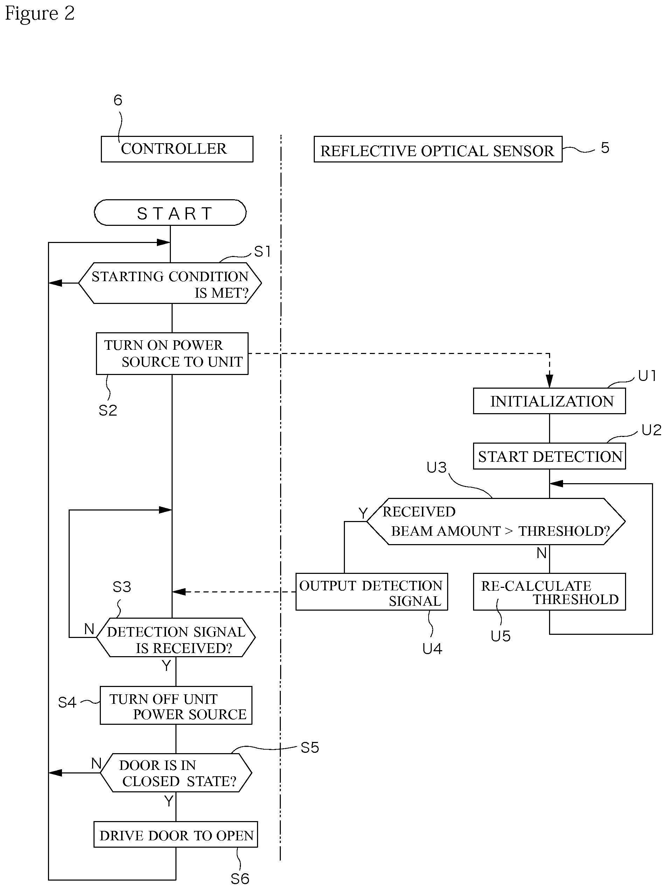

As shown in Fig. 2, at the start of the control, the controller 6, first, detects whether or not current conditions meet an operation control mode for the power back door 8 (Step S1). Whether or not the conditions meet the operation control mode can be appropriately determined in the specifications. For example, the conditions can be set: when the gear stick is at the parking position; when the door is in an unlocked state; or, when the presence of an unillustrated electronic key is detected within a certain area from the vehicle; specifically, for example, a response signal is successfully received from an electronic key within a certain period after a request signal is outputted to the electronic key.

If the starting conditions are met in Step S1, the controller 6 activates the reflective optical sensor 5 (Step S2), and waits until a detection signal from the reflective optical sensor 5 is received (Step S3).

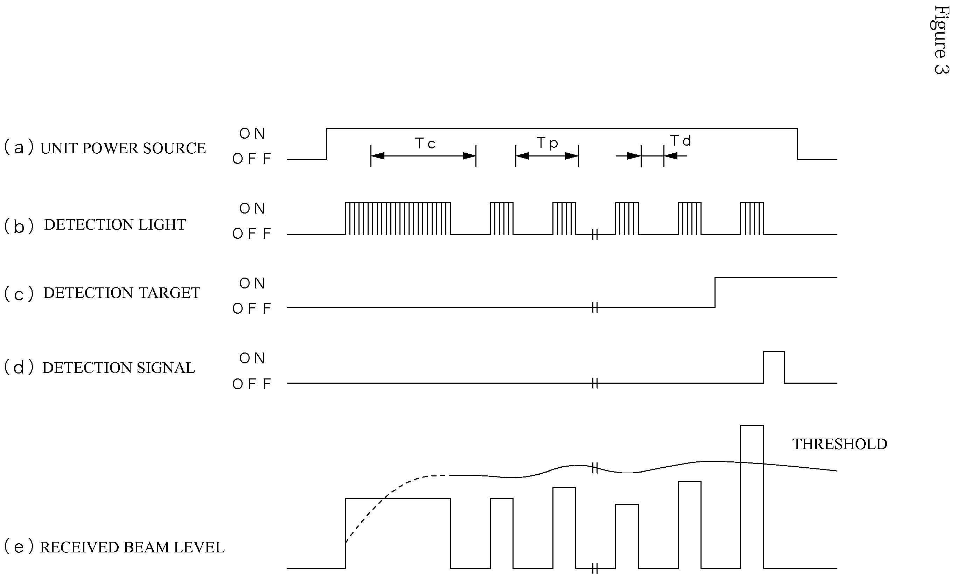

To reduce an influence from external disturbing light, the reflective optical sensor 5 is configured to emit the detection light 3 in the form of light pulses, and determine a received beam level at the light receiving portion 5a in accordance with the timing of the pulsed output. When activated in Step S2, first, the reflective optical sensor 5 emits an appropriate number of the detection light 3 pulses within a predetermined certain calibration time (Tc) as shown in Fig. 3 to execute initialization processing (Step U1).

The initialization processing is to calibrate a determination threshold for the detection target 4 according to a use environment or a use condition such as a change in the amount of emitted beams due to dirt on the light emitting opening 2, a change in the amount of reflected beams due to conditions of a reflection surface such as color and dirt, or a change in the amount of external light due to the brightness of the surrounding, by detecting the received beam level of beams reflected from the bottom wall portion of the recessed hollow section 1. No detection operation on the detection target 4 is performed in the initialization processing unlike a determination operation to be described later.

In the present embodiment, the determination threshold is calculated by adding a predetermined threshold constant to an average value of the received beam level at the light receiving portion 5a within the calibration time (Tc).

When the initialization processing is terminated as described above, a detection operation is started (Step U2). The detection operation is performed such that the pulsed detection light 3 is emitted at certain intervals (Tp) for a certain time (Td). If the received beam level at the light receiving portion 5a exceeds the determination threshold determined in the above-described procedure (Step U3), a detection signal is outputted to the controller 6 (Step U4).

On the other hand, if the received beam level does not exceed the determination threshold in Step U3, the determination threshold used in Step U3 is re-calculated (Step U5) for the next determination operation. The re-calculation can be performed by the same procedure as that for setting the determination threshold in the initialization. For example, the determination threshold can be calculated by multiplying the already-used determination threshold by the number of pulses used in Step U3 as a weight, calculating an average value of the obtained product and a sum of the received beam level in Step U3, calculating a value per pulse by dividing the average value, and adding the threshold constant to the obtained value per pulse.

If the controller 6 receives the outputted detection signal in Step U4 (Step S3), the power source of the reflective optical sensor 5 is turned off (Step S4). Then, whether or not the door is in a closed state is detected (Step S5). If the door is in the closed state, a drive signal to the driver 7 is generated to operate the driver 7, so that the back door 8 is driven to open (Step S6).

### REFERENCE NUMERALS

- 1: RECESSED HOLLOW SPACE
- 2: LIGHT EMISSION OPENING
- 3: DETECTION LIGHT
- 4: DETECTION TARGET
- 5: REFLECTIVE OPTICAL SENSOR
- 6: CONTROLLER
- 7: CONTROL TARGET

## Claims

1. A control structure of a vehicle, comprising:
a controller (6);
a recessed hollow section (1) formed in an outer wall of the vehicle; and
a reflective optical sensor (5) configured to emit detection light (3) from a light emitting opening (2) provided in one wall surface of the recessed hollow section (1) toward another wall surface of the recessed hollow section (1), and to detect the entry of a detection target (4) into the recessed hollow section (1) when a received beam level of an amount of reflected beams of the detection light (3) exceeds a certain determination threshold,
wherein the controller (6) is configured to operate a certain control target (7) of the vehicle when the reflective optical sensor (5) detects an entry of the detection target (4) into the recessed hollow section (1), wherein the recessed hollow section (1) is a license-plate attachment recess on a back door (8) of the vehicle, and wherein the control structure is configured in such a manner that an optical axis of the reflective optical sensor (5) is directed to an inner side of the vehicle.

2. The control structure of a vehicle according to claim 1, wherein the reflective optical sensor (5) is positioned with the light emitting opening (2) being directed downward.

3. The control structure of a vehicle according to claim 1, wherein the control target (7) is an opening and closing operation controller for the back door (8) of the vehicle.

4. The control structure of a vehicle according to claim 1, wherein the reflective optical sensor (5) is an infrared sensor.

5. The control structure of a vehicle according to claim 1, wherein a determination threshold for the detection target (4) used in the reflective optical sensor (5) is determined according to a received beam level at a light receiving portion (5a) for a certain time before the determination.

6. The control structure of a vehicle according to claim 1, **characterized in that**
the structure further comprises detection means for detecting whether or not an electronic key is present within a certain area from the vehicle, and
the controller (6) operates the certain control target (7) when the detection means detects the presence of the electronic key within the certain area from the vehicle and the reflective optical sensor (5) detects the entry of the detection target (4) into the recessed hollow section (1).

## Patentansprüche

1. Steuerstruktur eines Fahrzeugs, umfassend:
eine Steuereinheit (6);
einen ausgesparten hohlen Abschnitt (1), der in einer Außenwand des Fahrzeugs ausgebildet ist; und
einen reflektierenden optischen Sensor (5), der zum Ausstrahlen von Detektionslicht (3) aus einer Licht ausstrahlenden Öffnung (2), die in einer Wandfläche des ausgesparten hohlen Abschnitts (1) bereitgestellt ist, in Richtung auf eine andere Wandfläche des ausgesparten hohlen Abschnitts (1) und zum Erkennen des Eintritts eines Detektionsziels in den ausgesparten hohlen Abschnitt (1), wenn ein empfangenes Strahlenniveau einer Menge reflektierter Strahlen des Detektionslichts (3) einen gewissen Bestimmungsschwellenwert übersteigt, konfiguriert ist,
wobei die Steuereinheit (6) zum Betätigen eines gewissen Steuerziels (7) des Fahrzeugs, wenn der reflektierende optische Sensor (5) einen Eintritt des Detektionsziels (4) in den ausgesparten hohlen Abschnitt (1) erkennt, konfiguriert ist, wobei der ausgesparte hohle Abschnitt (1) eine Anbringungsaussparung für ein Kraftfahrzeugkennzeichen an einer hinteren Tür (8) des Fahrzeugs ist und wobei die Steuerstruktur so konfiguriert ist, dass eine optische Achse des reflektierenden optischen Sensors (5) zu einem Inneren des Fahrzeugs gerichtet ist.

2. Steuerstruktur eines Fahrzeugs nach Anspruch 1, wobei der reflektierende optische Sensor (5) mit nach unten gerichteter Licht ausstrahlender Öffnung (2) positioniert ist.

3. Steuerstruktur eines Fahrzeugs nach Anspruch 1, wobei das Steuerziel (7) eine Öffnungs- und Schließvorgang-Steuereinheit für die hintere Tür (8) des Fahrzeugs ist.

4. Steuerstruktur eines Fahrzeugs nach Anspruch 1, wobei der reflektierende optische Sensor (5) ein Infrarotsensor ist.

5. Steuerstruktur eines Fahrzeugs nach Anspruch 1, wobei ein Bestimmungsschwellenwert für das im reflektierenden optischen Sensor (5) verwendete Detektionsziel (4) gemäß einem empfangenen Strahlenniveau an einem Lichtempfangsteil (5a) für eine gewisse Zeit vor der Bestimmung bestimmt wird.

6. Steuerstruktur eines Fahrzeugs nach Anspruch 1, **dadurch gekennzeichnet, dass**
die Struktur ferner ein Detektionsmittel zum Erkennen aufweist, ob sich in einem gewissen Bereich vom Fahrzeug ein elektronischer Schlüssel befindet; und
die Steuereinheit (6) das gewisse Steuerziel (7) betätigt, wenn das Erkennungsmittel die Anwesenheit des elektronischen Schlüssels innerhalb des gewissen Bereichs vom Fahrzeug erkennt und der reflektierende optische Sensor (5) den Eintritt des Erkennungsziels (4) in den ausgesparten hohlen Teil (1) erkennt.

## Revendications

1. Structure de commande d'un véhicule, comprenant :
un contrôleur (6) ;
une section creuse évidée (1) formée dans une paroi extérieure du véhicule ; et
un capteur optique réflecteur (5) configuré pour émettre une lumière de détection (3) d'une ouverture émettrice de lumière (2) fournie dans une surface de paroi de la section creuse évidée (1) vers une autre surface de paroi de la section creuse évidée (1), et pour détecter l'entrée d'une cible de détection (4) dans la section creuse évidée (1) lorsqu'un niveau de faisceaux reçus d'une quantité de faisceaux réfléchis de la lumière de détection (3) dépasse un certain seuil de détermination,
dans laquelle le contrôleur (6) est configuré pour faire fonctionner une certaine cible de commande (7) du véhicule lorsque le capteur optique réflecteur (5) détecte une entrée de la cible de détection (4) dans la section creuse évidée (1), où la section creuse évidée (1) est un évidement de fixation de plaque d'immatriculation sur la portière arrière (8) du véhicule, et où la structure de commande est configurée d'une manière telle qu'un axe optique du capteur optique réflecteur (5) est dirigé vers un côté intérieur du véhicule.

2. Structure de commande d'un véhicule selon la revendication 1, dans laquelle le capteur optique réflecteur (5) est positionné avec l'ouverture émettrice de lumière (2) étant dirigée vers le bas.

3. Structure de commande d'un véhicule selon la revendication 1, dans laquelle la cible de commande (7) est un contrôleur d'opération d'ouverture et de fermeture pour la portière arrière du véhicule.

4. Structure de commande d'un véhicule selon la revendication 1, dans laquelle le capteur optique réflecteur (5) est un capteur infrarouge.

5. Structure de commande d'un véhicule selon la revendication 1, dans laquelle un seuil de détermination pour la cible de détection (4) utilisée dans le capteur optique réflecteur (5) est déterminé conformément à un niveau de faisceaux reçus à une partie réceptrice de lumière (5a) pendant un certain temps avant la détermination.

6. Structure de commande d'un véhicule selon la revendication 1, **caractérisée en ce que**
la structure comprend en outre un moyen de détection pour détecter si une clé électronique est présente ou non dans une certaine zone du véhicule, et
le contrôleur (6) fait fonctionner la certaine cible de commande (7) lorsque le moyen de détection détecte la présence de la clé électronique dans la certaine zone du véhicule et le capteur optique réflecteur (5) détecte l'entrée de la cible de détection (4) dans la section creuse évidée (1).
